# EUROPÄISCHE PATENTSCHRIFT

(11) **EP 2 568 796 B1**
(45) Veröffentlichungstag und Bekanntmachung des Hinweises auf die Patenterteilung: **11.10.2017**
(21) Anmeldenummer: 11735770.7
(22) Anmeldetag: 06.05.2011
(51) Int. Cl.: A01B 3/46

(54) **AUFSATTELDREHPFLUG**
SEMIMOUNTED TURN-ABOUT PLOUGH
CHARRUE SEMI-PORTÉE BRABANT

(30) Priorität: 08.05.2010 DE 102010019819
(43) Veröffentlichungstag der Anmeldung: 20.03.2013
(73) Patentinhaber: Lemken GmbH & Co. KG, 46519 Alpen (DE)
(72) Erfinder: MEURS, Wilhelm, 46519 Alpen (DE)
(74) Vertreter: Schulte & Schulte
(86) Internationale Anmeldenummer: PCT/DE2011/001044
(87) Internationale Veröffentlichungsnummer: WO 2012/006979

(56) Entgegenhaltungen:
- EP-A1- 0 266 440
- EP-A1- 1 731 009
- EP-A2- 0 019 275
- EP-A2- 2 033 503
- DE-A1- 1 920 899
- DE-U1- 9 204 130
- DE-U1-202009 014 618
- FR-A1- 2 119 864
- US-A- 3 583 494
- US-A1- 2005 098 329

## Beschreibung

Die Erfindung betrifft einen Aufsatteldrehpflug gemäß dem Oberbegriff des Patentanspruches 1. Ein derartiger Aufsatteldrehpflug ist der DE-U-9204130.2 zu entnehmen. Ein weiterer Aufsatteldrehpflug ist der europäischen Patentschrift EP 1 549 124 zu entnehmen. Bei diesem Aufsatteldrehpflug befindet sich zwischen der Anbauvorrichtung und dem Pflugrahmen ein Hydraulikzylinder. Mit diesem Hydraulikzylinder soll die Traktion des Traktors verbessert werden. Soll die Vorderachse des Traktors zusätzlich belastet werden, wird im Oberlenker des Traktors über den Hydraulikzylinder eine Druckkraft erzeugt. Soll die Hinterachse des Traktors belastet werden, lehrt diese EP 1 549 124, dass dann im Oberlenker des Traktors eine Zugkraft erzeugt werden muss. Dieser Stand der Technik hat den Nachteil, dass beim Drehen des Pflugrahmens ein hohes Drehmoment vom Drehwerk erzeugt werden muss. Das Drehwerk muss dazu entsprechend aufwendig und schwer und damit auch teuer ausgelegt werden. Auch alle benachbarten Bauteile müssen den dort auftretenden Kräften entsprechend ausgelegt werden, was sich auch bei den Herstellkosten negativ auswirkt. Ein weiterer vergleichbarer Aufsatteldrehpflug ist der EP 2 033 503 zu entnehmen. Wie bei dem Aufsatteldrehpflug gemäß der EP 1 549 124 ist auch hier ein Hydraulikzylinder vorgesehen, mit dem Zugkraft im Oberlenker erzeugt werden muss, wenn die Traktion der Hinterachse des Traktors durch Gewichtübertragung vom Aufsattelpflug auf den Traktor erhöht werden soll. Hier bestehen die zuvor beschriebenen Nachteile bezüglich der hohen erforderlichen Drehenergie im höheren Maße, da diese Konzeption eines Aufsatteldrehpfluges mit nur einem Rad als Fahrwerk seitlich am Rahmen eine deutlich höhere Drehenergie erfordert. Aus der EP-A-2 033 503 ist ein Aufsattelpflug bekannt, der während der Pflugarbeit einen Teil des Pfluggewichtes zur Verbesserung der Traktion auf die Hinterachse des Schleppers übertragen soll. In Hinblick auf das beim Drehen des Pflugrahmens erzeugte Drehmoment muss das Drehwerk gem. EP-A-2 033 503 aufwendig und schwer bauen und teuer ausgelegt werden, was in Konsequenz auch für die benachbarten Bauteile gilt.

Aufgabe der Erfindung ist es, eine Vorrichtung zu schaffen, die die erforderliche Drehenergie für das Drehen des Pflugrahmens reduziert, die die Kosten für das Drehwerk in Grenzen hält, die während des Drehvorganges auch die Standsicherheit des Traktors erhöht und die auch die Traktion des Traktors durch Gewichtsübertragung vom Aufsattelpflug auf den Traktor verbessert.

Diese Aufgabe wird erfindungsgemäß durch die Merkmale des kennzeichnenden Teils des Patentanspruches 1 gelöst.

Dadurch dass die Drehachse bzw. die gedachte Verlängerung der Drehachse den Pflugrahmen in Arbeitsstellung furchenseitig im Abstand zum Schwerpunkt des Pflugrahmens schneidet, liegt der Schwerpunkt des Pflugrahmens zwischen der Drehachse bzw. der gedachten Verlängerung der Drehachse und dem Drehgelenk des Fahrwerkes bzw. Rades. Bei Betätigung des Hydraulikzylinders wird Gewicht vom Aufsatteldrehpflug auf den Traktor übertragen und dadurch ein Drehmoment auf den Pflugrahmen um die Drehachse ausgeübt. Da sich der Schwerpunkt des Pflugrahmens seitlich von der Drehachse bzw. der gedachten Verlängerung der Drehachse zwischen Rad und Drehachse bzw. der gedachten Verlängerung der Drehachse befindet, bewirkt eine Betätigung des Hydraulikzylinders ein Drehen des Pflugrahmens, wenn die Zugkraft im Hydraulikzylinder entsprechend groß ausgelegt wird. Eine entsprechend geringere Zugkraft im Hydraulikzylinder bewirkt dagegen nur eine Reduzierung des erforderlichen Drehmomentes, das vom Drehwerk aufgebracht werden muss. Die Größe der Reduzierung des erforderlichen Drehmomentes richtet sich nach dem Abstand zwischen dem Schwerpunkt des Pflugrahmens und der gedachten Verlängerung der Drehachse und dem vom Hydraulikzylinder übernommenen Gewichtsanteil. Um diese Größe der Reduzierung des erforderlichen Drehmomentes kann dann das erforderliche Drehmoment des Drehwerkes und damit auch die Größe der Hydraulikzylinder des Drehwerkes reduziert und die Standfestigkeit des Traktors während des Drehvorganges vergrößert werden. Somit wird zum einen Gewicht vom Gerät auf den Traktor zwecks verbesserter Traktion übertragen und das für den Drehvorgang des Pflugrahmens erforderliche Drehmoment des Drehwerks deutlich reduziert.

Die Erfindung sieht weiter vor, dass die Drehachse bzw. die gedachte Verlängerung der Drehachse den Pflugrahmen in Arbeitsstellung im vorderen Bereich schneidend angeordnet ist. Dadurch, dass die Drehachse oder die gedachte Verlängerung der Drehachse den Pflugrahmen im vorderen Bereich schneidet, wird der Abstand zum Schwerpunkt des Pflugrahmens relativ groß und damit auch der wirksame Hebelarm, der zusammen mit der Hubkraft des Hydraulikzylinders die Reduzierung des erforderlichen Drehmomentes des Drehwerkes für den Drehvorgang des Pflugrahmens bewirkt.

Eine Vergrößerung des Hebelarms wird dadurch erzielt, dass die Drehachse oder die gedachte Verlängerung der Drehachse den Pflugrahmen in Arbeitsstellung im Bereich zwischen dem ersten Pflugkörper und dem dritten Pflugkörper schneidend angeordnet ist. Die Reduzierung des erforderlichen Drehmomentes des Drehwerkes für das Drehen des Pflugrahmens wird dadurch noch erhöht.

Erfindungsgemäß ist weiter vorgesehen, dass mit dem Anbaugestell oder mit dem Zwischenrahmen ein Zugrahmen in Verbindung steht, der im hinteren Bereich des Pflugrahmens mittelbar oder unmittelbar mit dem Pflugrahmen oder dem Fahrwerk verbunden ist. Der Pflugrahmen mit den daran angeordneten Körpern wird somit über den Verbindungspunkt des Wendearms des Drehwerkes mit dem Pflugrahmen und dem Verbindungspunkt des Zugrahmens mit dem Pflugrahmen oder dem Fahrwerk gezogen. Dies bewirkt eine günstige Krafteinleitung der Zugkräfte in den Pflugrahmen.

Dabei ist vorgesehen, dass der Zugrahmen kardanisch mit dem Anbaugestell oder dem Zwischenrahmen und dem Fahrwerk verbunden ist und als torsionsfester Stabilisator zur Fixierung der aufrechten Stellung des Rades dienend ausgebildet ist. In dem Fall, in dem das Fahrwerk aus nur einem Rad besteht, kann so in bekannter Art und Weise das Rad in seiner aufrechten Stellung fixiert und geführt werden.

Weitere Einzelheiten und Vorteile des Erfindungsgegenstandes ergeben sich aus der nachfolgenden Beschreibung und den zugehörigen Zeichnungen, in denen zwei Ausführungsbeispiele mit den dazu notwendigen Einzelheiten und Einzelteilen dargestellt sind.
- Figur 1: zeigt eine Seitenansicht des Aufsatteldrehpfluges in Arbeitsstellung,
- Figur 2: zeigt eine Draufsicht des Aufsatteldrehpfluges in Arbeitsstellung und
- Figur 3: zeigt einen Ausschnitt der Seitenansicht des vorderen Teils des Aufsatteldrehpfluges gemäß Figur 1

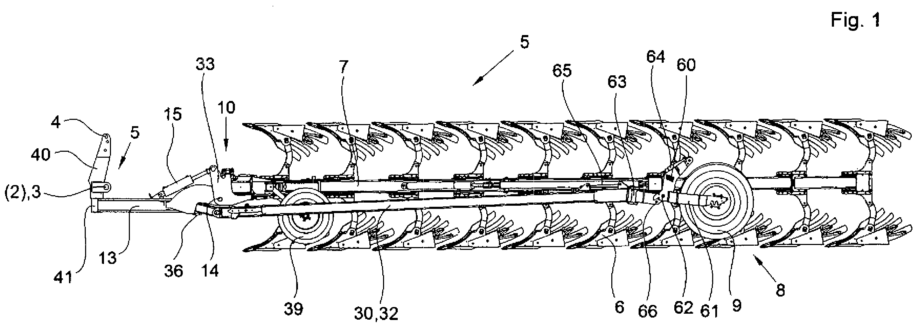

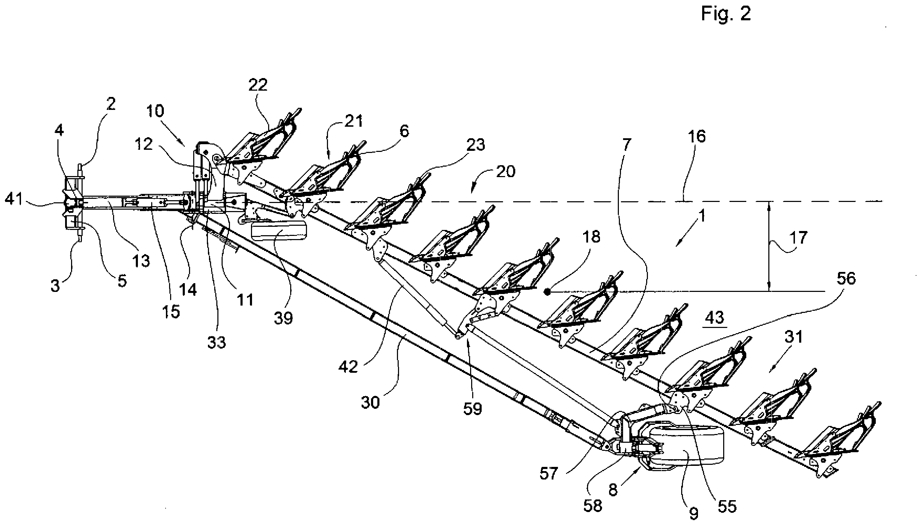

Figur 1 zeigt eine Seitenansicht des Aufsatteldrehpfluges 1 in Arbeitsstellung. Der Aufsatteldrehpflug 1 besteht aus den Hauptkomponenten Anbaugestell 5, Drehwerk 10, Fahrwerk 8, Zugrahmen 30 und dem Pflugrahmen 7 mit den Pflugkörpern 6. Über das Anbaugestell 5 wird der Aufsatteldrehpflug 1 mit dem Dreipunktgestänge eines Traktors verbunden. Dafür sind am Anbaugestell 5 die Oberlenkeranlenkung 4 und die Unteranlenkungen 2 und 3 vorgesehen. Das Anbaugestell 5 mit seinem Anbauturm 40 weist die aufrecht stehende Achse 41 auf, mit der der Pflugrahmen 7 und das Fahrwerk 8 über den Zwischenrahmen 13 gelenkig verbunden sind. Am Zwischenrahmen 13 ist endseitig die Querachse 14 vorgesehen, über die das Drehwerk 10 mit seinem Achsträger 33 schwenkbar verbunden ist. Der Hydraulikzylinder 15 ist im Abstand zur Querachse 14 mit dem Achsträger 33 und dem Zwischenrahmen 13 verbunden. Der Hydraulikzylinder 15 überträgt bei Betätigung Gewicht des Pflugrahmens 7 auf das Anbaugestell 5 und damit auf die Hinterachse des nicht dargestellten Traktors. Der Hydraulikzylinder 15 ist dazu mit einem oder mehreren hier nicht dargestellten Hydrospeichern ausgestattet, die unter Beibehaltung der Gewichtsübertragung des Pflugrahmens auf den Traktor eine Bodenanpassung des Pflugrahmens 7 mit den Pflugkörpern 6 zulassen. Die Pflugkörper 6 werden in der Arbeitstiefe vorne über das Tastrad 39 und hinten über das Fahrwerk 8 mit Rad 9 geführt. Der Achsträger 33 nimmt die Drehachse 11 und den Wendearm 12 auf, was insbesondere der Figur 2 zu entnehmen ist. Das Fahrwerk 8 steht über den Zugrahmen 30 mit dem Anbaugestell 5 in Verbindung. Der Zugrahmen 30 dient in diesem Fall als torsionssteifer Stabilisator 32, der kardanisch über das Zwischenglied 36 und den Zwischenrahmen 13 mit dem Anbaugestell 5 verbunden ist. Der Zugrahmen 30 bzw. der Stabilisator 32 sind im hinteren Bereich 31 des Aufsatteldrehpfluges 1 über die hintere Querachse 62 und die aufrechte Achse 63 kardanisch mit dem Radträger 60 verbunden, der über den Hydraulikzylinder 64 um die hintere Querachse 62 verschwenkbar ist, wodurch unter anderem auch die Arbeitstiefe der Pflugkörper 6 verändert werden kann. Zur Sicherung der Bodenfreiheit wird die Schwenkbarkeit des Radträgers 60 um die hintere Querachse 62 mittels Anschlag 66 begrenzt. Über das Stellteil 65 kann die Länge des Zugrahmens 30 und damit auch die Vorderfurchenbreite des Aufsatteldrehpfluges 1 in bekannter Weise verändert werden. Der Radträger 60 weist die Radgabel 61 auf, in der das Rad 9 gelagert ist.

Figur 2 zeigt eine Draufsicht des Aufsatteldrehpfluges 1 in Arbeitsstellung. Der Aufsatteldrehpflug 1 ist insgesamt um die aufrecht stehende Achse 41 frei nachlaufend mit dem Traktor über das Anbaugestell 5 und der Oberlenkeranlenkung 4 und den Unterlenkeranlenkungen 2, 3 verbunden. Mit der aufrecht stehenden Achse 41 ist der Zwischenrahmen 13 verbunden, der den Achsträger 33 des Drehwerkes 10 mit der Drehachse 11 und dem Wendearm 12 aufnimmt. Durch die besondere Anordnung des Drehwerkes 10 befindet sich die Drehachse 11 in einer Position, die gewährleistet, dass die gedachte Verlängerung 16 der Drehachse 11 furchenseitig im Abstand 17 zum Schwerpunkt 18 in Richtung der Verlängerung 16 der Drehachse 11 gesehen den Pflugrahmen 7 schneidet. Um den Effekt der Reduzierung der erforderlichen Drehenergie zu erreichen, muss die gedachte Verlängerung 16 der Drehachse 11 den Pflugrahmen 7 im vorderen Bereich 20 schneiden. In dem Beispiel gemäß Figur 2 schneidet die gedachte Verlängerung 16 der Drehachse 11 den Pflugrahmen 7 im Bereich 21, und zwar zwischen dem ersten Pflugkörper 22 und dem dritten Pflugkörper 23. Bei dem Aufsatteldrehpflug 1 handelt es sich um einen Aufsatteldrehpflug 1 mit variabler Arbeitsbreitenverstellung pro Pflugkörper 6. Bei Betätigung des Hydraulikzylinders 42 wird über das Stellgetriebe 59 die Arbeitsbreite der einzelnen Pflugkörper 6 verändert. Dabei wird auch der Radarm 57 mit der Schwenklagerung 58 und damit auch das Fahrwerk 8 mit dem Rad 9 arbeitsrichtungsparallel mit verstellt. Der Radarm 57 mit der Schwenklagerung 58 ist hinten am Pflugrahmen 7 über die Konsole 55 mit dem Pflugrahmen 7 verbunden. Bei Betätigung des Hydraulikzylinders 42 verändert sich neben der Lage des Pflugrahmens 7 auch die Lage des Zugrahmens 30 und des Zwischenrahmens 13. Durch die Veränderung der Lage des Zwischenrahmens 13 verändert sich auch die Lage der gedachten Verlängerung 16 der Drehachse 11 und damit auch der Abstand 17 der gedachten Verlängerung 16 der Drehachse 11 zum Schwerpunkt 18. In jeder Arbeitsbreitenstellung ist sichergestellt, dass sich die gedachte Verlängerung 16 der Drehachse 11 immer furchenseitig im Abstand 17 vom Schwerpunkt 18 befindet. Die Reduzierung der erforderlichen Drehenergie für das Drehwerk 10 ist dann optimal, wenn der Abstand 17 sehr groß und die Hubkraft des Hydraulikzylinders 15 ebenfalls sehr groß ist. Umgekehrt ist die Reduzierung der erforderlichen Drehenergie für das Drehwerk 10 geringer, wenn die Hubkraft des Hydraulikzylinders 15 reduziert und der Abstand 17 kleiner wird. Eine Reduzierung der erforderlichen Drehenergie ist nicht möglich, wenn die Hubkraft des Hydraulikzylinders 15 gleich Null ist oder wenn die gedachte Verlängerung 16 der Drehachse 11 durch den Schwerpunkt 18 verläuft oder landseitig zum Schwerpunkt 18 verläuft. Mit landseitig ist der Bereich 43 gemeint, der sich in rechts wendender Pflugstellung des Aufsatteldrehpfluges 1 links vom Schwerpunkt 18 des Pflugrahmens 7 befindet.

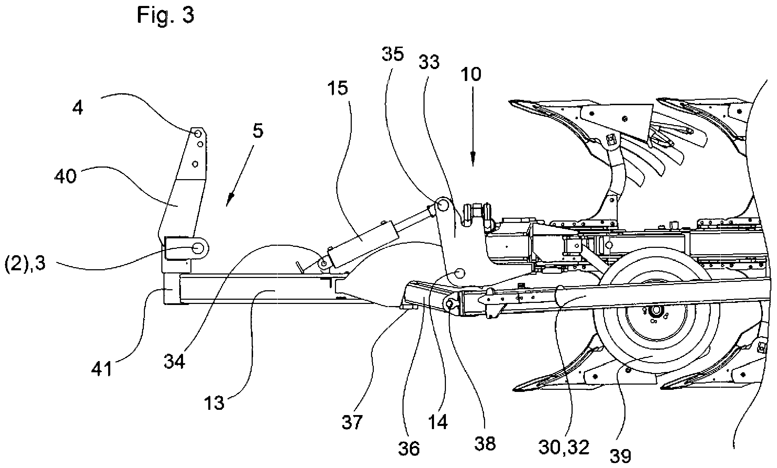

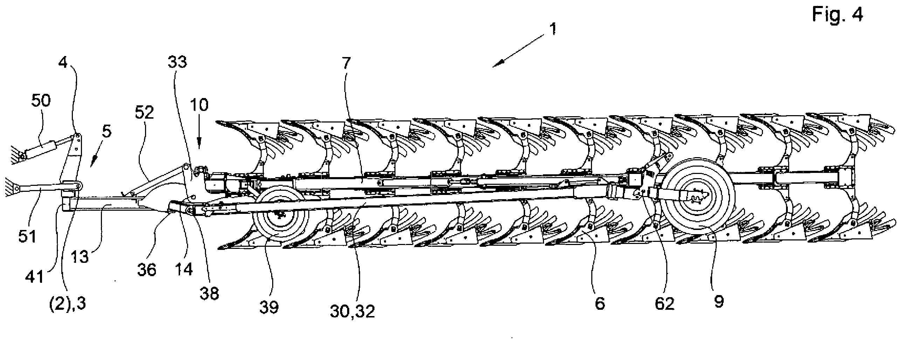

Figur 3 zeigt einen Ausschnitt einer Seitenansicht des vorderen Teils des Aufsatteldrehpfluges 1. Der Hydraulikzylinder 15 ist zum einen mit dem Anbaupunkt 35 des Achsträgers 33 verbunden und zum anderen mit dem Anbaupunkt 34 des Zwischenrahmens 13. Der Hydraulikzylinder 15 ist dabei im Abstand zur Querachse 14 angeordnet. Je größer der Abstand ist, desto mehr Gewicht kann bei gleicher Hubkraft bzw. Zugkraft des Hydraulikzylinders 15 vom Pflugrahmen 7 auf den Traktor übertragen werden. Figur 3 verdeutlicht auch die Anordnung des Zwischengliedes 36, das den Zugrahmen 30 bzw. den Stabilisator 32 kardanisch mit dem Zwischenrahmen 13 verbindet. Dazu weist das Zwischenglied 36 die vertikale Zugachse 37 und die horizontale Zugachse 38 auf.

Bei der Ausführung gemäß Figur 1 bis 3 kann die Hubkraft bzw. die Zugkraft des Hydraulikzylinders 15 bzw. 50 durch eine Regeleinrichtung geregelt werden, z.B. in Abhängigkeit vom Schlupf der Antriebsräder des Traktors oder mit einer voreingestellten Regelgröße der Zugkraft bzw. Hubkraft des jeweiligen Hydraulikzylinders 15 bzw. 50.

## Patentansprüche

1. Aufsatteldrehpflug (1) mit einem mehrere Anlenkpunkte (2, 3, 4) aufweisenden Anbaugestell (5) für den Anbau an die Ober- und Unterlenker eines Traktors sowie einem mehrere Pflugkörper (6) tragenden Pflugrahmen (7), der über ein Fahrwerk (8) mit mindestens einem Rad (9) getragen wird und über das Drehwerk (10) mit Drehachse (11) und Wendearm (12) in die jeweilige Arbeitsstellung gedreht wird und gelenkig über einen Zwischenrahmen (13) mit dem Anbaugestell (5) in horizontaler Richtung insgesamt um die aufrechtstehende Achse (41) frei nachlaufend mit dem Traktor über das Anbaugestell (5) und der Oberlenkeranlenkung (4) und den Unterlenkeranlenkungen (2, 3) schwenkbar verbunden ist, wobei zwischen dem Pflugrahmen (7) und dem Anbaugestell (5) eine Querachse (14) vorgesehen ist, um die der Pflugrahmen (7) in vertikaler Richtung schwenkbar angeordnet ist, wobei die gedachte Verlängerung (16) der Drehachse (11) den Pflugrahmen (7) in Arbeitsstellung furchenseitig im Abstand (17) zum Schwerpunkt (18) des Pflugrahmens (7) schneidend angeordnet ist,
**gekennzeichnet durch**
einen im Abstand zur Querachse (14) zwischen Pflugrahmen (7) und Anbaugestell (5) angeordneten und mit dem Achsträger (33) des Drehwerks (10) und dem Zwischenrahmen (13) verbundenen Hydraulikzylinder (15), mit dem Gewicht vom Aufsatteldrehpflug (1) auf den Traktor übertragen und dadurch ein Drehmoment auf den Pflugrahmen (7) um die Querachse (14) ausgeübt wird, wobei in jeder Arbeitsbreitenstellung sichergestellt ist, dass sich die gedachte Verlängerung (16) der Drehachse (11) immer furchenseitig im Abstand (17) vom Schwerpunkt (18) des Pflugrahmens (7) befindet und dass ein Zugrahmen (30) kardanisch mit dem Anbaugestell (5) oder dem Zwischenrahmen (13) und dem Fahrwerk (8) verbunden ist und als torsionsfester Stabilisator (32) zur Fixierung der aufrechten Stellung des Rades (9) dienend ausgebildet ist.

2. Aufsatteldrehpflug nach Anspruch 1,
**dadurch gekennzeichnet,**
**dass** die Drehachse (11) bzw. die gedachte Verlängerung (16) der Drehachse (11) den Pflugrahmen (7) in Arbeitsstellung im vorderen Bereich (20) schneidend angeordnet ist.

3. Aufsatteldrehpflug nach Anspruch 1 und 2,
**dadurch gekennzeichnet,**
**dass** die Drehachse (11) oder die gedachte Verlängerung (16) der Drehachse (11) den Pflugrahmen (7) in Arbeitsstellung im Bereich (21) zwischen dem ersten Pflugkörper (6, 22) und dem dritten Pflugkörper (6, 23) schneidend angeordnet ist.

4. Aufsatteldrehpflug nach Anspruch 1,
**dadurch gekennzeichnet,**
**dass** mit dem Anbaugestell (5) oder mit dem Zwischenrahmen (13) ein Zugrahmen (30) in Verbindung steht, der im hinteren Bereich (31) des Pflugrahmens (7) mittelbar oder unmittelbar mit dem Pflugrahmen (7) oder dem Fahrwerk (8) verbunden ist.

## Claims

1. A semi-mounted reversible plow (1) comprising an attachment frame (5), wherein the attachment frame (5) has a plurality of link points (2, 3, 4) having upper and lower links to attach a tractor, as well as a plow frame (7) carrying a plurality of plow bodies (6), wherein the plow frame (7) is supported via a carriage (8) with at least one wheel (9), wherein the plow frame (7) is turned via a slewing gear (10) with a rotational axis (11) and turning arm (12) into the repsective operating position of the plow frame (7), and wherein the plow frame (7) is connected via an intermediate frame (13) and as a whole is pivot-mounted in a horizontal direction to the attachment frame (5) and free trailing around the upright standing axis (41) connected to the tractor and the lower links (2, 3) with the attachment frame (5) wherein a transverse axis (14) is provided between the plow frame (7) and the intermediate frame (5), around which the plow frame (7) is arranged pivotably in vertical direction wherein an imaginary extension (16) of the rotational axis (11) is arranged to cross the plow frame (7) in the operating position on a furrow side at a distance (17) from a center of gravity (18) of the plow frame (7) and the plow bodies (6),
**characterized in that**
a hydraulic cylinder (15) is arranged between plough frame (7) and attachment frame (5) in a distance to the transverse axis (14) and is connected to the cross-member (33) of the slewing gear (10) and to the intermediate frame (13), wherein weight of the semi-mounted reversible plow (1) can be transferred to the tractor wherein a torque is applied onto the plow frame (7) around the transverse axis (14), wherein the imaginary extension (16) of the rotational axis (11) is arranged to cross the plow frame (7) in the operating position always on a furrow side from the center of gravity (18) of the plow frame (7) and the draw frame (30) is cardan-connected with the attachment frame (5) or the intermediate frame (13) and the travel gear (8) and build as a torsion resistant stabilizer (32) for fixing an upright position of the wheel (9).

2. The semi-mounted reversible plow according to claim 1,
**characterized in that**
the rotational axis (11) or the imaginary extension (16) of the rotational axis (11) is arranged to cross the plow frame (7) in the operating position in a front area (20).

3. The semi-mounted reversible plow according to claim 1,
**characterized in that**
the rotational axis (11) or the imaginary extension (16) of the rotational axis (11) is arranged to cross the plow frame (7) in the operating position in the area (21) between the first plow body (6, 22) and the third plow body (6, 23).

4. The semi-mounted reversible plow according to claim 1,
**characterized in that**
a draw frame (30) is connected with the intermediate frame (13) or the attachment frame, wherein the draw frame (30) is connected to the rear area (31) of the plow frame (7) directly or indirectly to the travel gear (8) or the plow frame (7).

## Revendications

1. Charrue réversible semi-portée (1) avec un châssis de montage (5) présentant plusieurs points d'articulation (2, 3, 4) pour le montage sur le bras supérieur d'attelage et le bras inférieur d'attelage d'un tracteur, ainsi qu'avec un cadre de charrue (7), portant plusieurs corps de charrue (6), qui est porté par le biais d'un train d'atterrissage (8) avec au moins une roue (9) et qui est tourné dans la position de travail respective par le biais du mécanisme de rotation (10) avec axe de rotation (11) et bras de braquage (12), et est raccordé de façon articulée par le biais d'un cadre intermédiaire (13) au châssis de montage (5) dans la direction horizontale, et raccordé globalement autour de l'axe (41) vertical, librement en arrière, de façon pivotante, au tracteur par le biais du châssis de montage (5) et à l'articulation du bras supérieur d'attelage (4) et aux articulations du bras inférieure d'attelage (2, 3), un axe transversal (14) étant prévu, entre le cadre de charrue (7) et le châssis de montage (5), autour duquel le cadre de charrue (7) est disposé de façon à pouvoir pivoter dans la direction verticale, le prolongement (16) imaginaire de l'axe de rotation (11) étant disposé en coupant le cadre de charrue (7) côté sillon dans la position de travail à la distance (17) du centre de gravité (18) du cadre de charrue (7), **caractérisée par**
un vérin hydraulique (15), disposé à distance de l'axe transversal (14) entre le cadre de charrue (7) et le châssis de montage (5) et raccordé au support d'essieu (33) du mécanisme de rotation (10) et au cadre intermédiaire (13), avec lequel le poids peut être transféré de la charrue semi-portée brabant (1) vers le tracteur, et de ce fait un couple est exercé sur le cadre de charrue (7) autour de l'axe transversal (14), étant assuré dans chaque position de largeur de travail que le prolongement (16) imaginaire de l'axe de rotation (11) se trouve toujours côté sillon à la distance (17) du centre de gravité (18) du cadre de charrue (7), et qu'un cadre d'attelage (30) est raccordé à la cardan au châssis de montage (5) ou au cadre intermédiaire (13) et au train d'atterrissage (8) et est constitué de façon à servir de stabilisateur (32) résistant à la torsion pour la fixation de la position verticale de la roue (9).

2. Charrue réversible semi-portée (1) selon la revendication 1,
**caractérisée en ce que**
l'axe de rotation (11) ou respectivement le prolongement (16) imaginaire de l'axe de rotation (11) est disposé en coupant le cadre de charrue (7) dans la position de travail dans la zone avant (20).

3. Charrue réversible semi-portée (1) selon les revendications 1 et 2,
**caractérisée en ce que**
l'axe de rotation (11) ou respectivement le prolongement (16) imaginaire de l'axe de rotation (11) est disposé en coupant le cadre de charrue (7) dans la position de travail dans la zone (21) entre le premier corps de charrue (6, 22) et le troisième corps de charrue (6, 23).

4. Charrue réversible semi-portée (1) selon la revendication 1,
**caractérisée en ce**
**qu'**un cadre d'attelage (30) est en liaison avec le châssis de montage (5) ou avec le cadre intermédiaire (13) et est raccordé, dans la zone (31) arrière du cadre de charrue (7), indirectement ou directement au cadre de charrue (7) ou au train d'atterrissage (8).
